# EUROPEAN PATENT SPECIFICATION

(11) **EP 3 813 523 B1**
(45) Date of publication and mention of the grant of the patent: **12.03.2025**
(21) Application number: 19814121.0
(22) Date of filing: 04.06.2019
(51) Int. Cl.: A01K 73/04, G01S 15/96

(54) **TRAWL STEERING SYSTEM**
SCHLEPPNETZLENKSYSTEM
SYSTÈME DE DIRECTION DE CHALUT

(30) Priority: 05.06.2018 NO 20180775
(43) Date of publication of application: 05.05.2021
(73) Proprietor: Remøy Sea Group AS, 6091 Fosnavåg (NO)
(72) Inventor: REMØY, Jack E., 6091 Fosnavåg (NO)
(74) Representative: Andorsen, Gro Katarina
(86) International application number: PCT/NO2019/000014
(87) International publication number: WO 2019/235935

(56) References cited:
- GB-A- 1 318 537
- JP-A- 2005 046 034
- JP-A- 2005 046 034
- JP-A- H01 250 876
- JP-A- S63 304 186
- NO-B- 120 174
- US-A1- 2017 255 200

## Description

The present invention relates to a trawl steering system comprising a sea vessel and a trawl system having a trawl, for maneuvring the trawl to a target volume such as a school or a haze/veil of fish, shrimp or other target volumes, in an efficient manner.

Known trawling systems are based on controlling a vessel where an operator measures the position of a target volume as well as the position of the trawl and steers the vessel in so as to move the trawl through the measured moving target volume. Norwegian patent NO120174/GB1318537 describes a well-known solution for locating a shoal of fish and thereafter aiming a trawl at said shoal of fish. Two sonar transducers with overlapping radiation fields in the horizontal plane, and two sonar transducers with overlapping radiation fields in the vertical plane, are used to aim the trawl at the shoal of fish. When the aiming operation is accomplished, the trawl is dragged along a straight line, behind the vessel, towards the shoal.

JP 2005046034 describes a system for using the vessel steering system to control the trawl movements, while at the same time optimizing trawl symmetry. Norwegian patent NO334751/EP2757877also discuss a system related to trawl symmetry. This is a complex operation and requires continuous monitoring of both trawl and target as well as environmental conditions such as wind and current. In addition, the trawl has to be controlled individually in order to
maintain the wanted shape and orientation of the trawl and to avoid damage to the trawl. Other uses of sensors for monitoring fish and trawl positions are also discussed in EP1594359, JP S5937416 and JP S60155987.

Automatic systems have been suggested but are mainly aimed at controlling the vessel movements using traditional rudders, propulsion power and/or steerable propellers, and through this the following trawl, according to the target position. They are, however, as discussed above still based on the vessel steering as the main means to steer the trawl, including frequent course and velocity adjustments which increases energy consumption up to 30% and wear on the equipment. It is an object of the present invention to provide a flexible and more efficient system, thus also reducing the fuel consumption and, hence reducing the environmental footprint. This is obtained by the invention defined in claim 1. Preferred embodiments are disclosed in the dependent claims.

The present invention is based on the realization that the vessel is only one of several components in a system for reaching the target volume, as for example the movement of the vessel may diverge in one direction due to wind while current as well as the target movement may require another type of movement for the trawl.

The present invention thus provide a means for automatic steering of the trawl toward the target area while taking into account such parameters as wind, current, vessel and trawl characteristics, and may also take into account bottom topography, other fishing equipment and floating or fixed objects etc. for calculating the trawl movements and steering the trawl. The trawl movements are prioritized while the vessel movements are only one of many possibilities to achieve this with as low power consumption as possible.

The system utilizes several steering methods, including the potential use of movements in three dimensions of the trawl by actively adjusting length and position of towing wires/leads, but also potentially actively using individually steerable and/or synchronized doors, deflectors and/or weights, the system utilizes in addition the steering effects of the vessel movements by moving towing points at the vessel, and adjusting length of towing wires/leads, as discussed in Norwegian Patent Application NO20170593/international application WO2018/186754, the system utilizes in addition the potential use of traditional vessel steering using rudders and propulsion. The individual steering methods are individually known but the present invention provides a system utilizing them to provide an improved system.

The present invention will be described more in detail below with reference to the accompanying drawings, illustrating the invention by way of examples.
Figure 1 illustrates an overview of the system according to the invention.
Figure 2 illustrates details of a trawl that may be used in the system.
Figure 3 illustrates the structure of the system.
Figure 4 illustrates the security margins relative to the trawl steering.

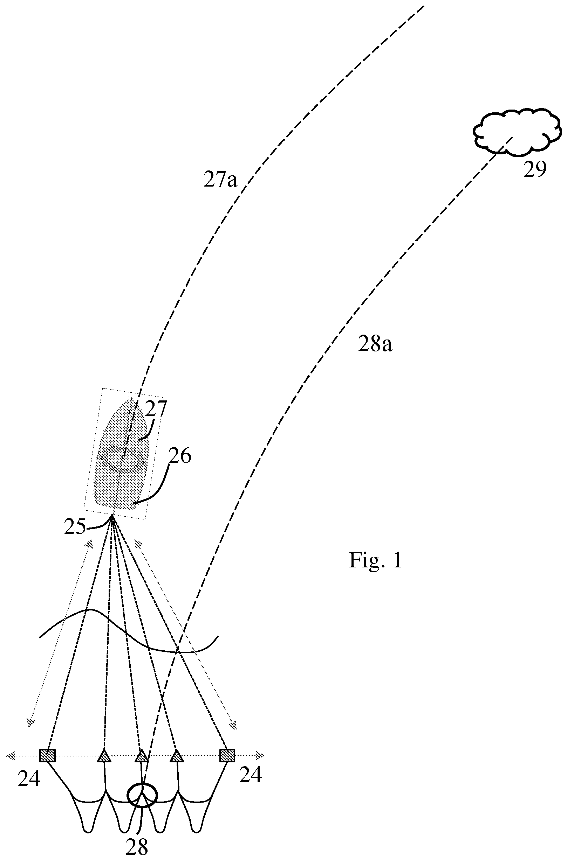

Figure 1 illustrates a vessel 27 having a path of movement 27a while towing a trawl 28 to be moved in a path 28a toward a target volume 29 e.g. containing fish or shrimps. Depending on the environmental conditions such as drag, current and wind, the trawl path of movement 28a may differ from the vessel path 27a and the relationship between these paths may be complex.

In addition there may be limitations to the freedom of maneuvering the vessel, and/or there might be limitations to the freedom of maneuvering the towed equipment due to for example other vessels, other fishing equipment and subsea topographical restrictions, these factors will potentially be taken into consideration when the system calculates the actual modus operandi from case to case ensuring the minimum use of energy, and thus increasing effectivity in the fisheries and reducing negative environmental impact.

The vessel path 27a is determined by the sum of forces over time.
- Vessel thrust vector is determined by the propeller thrust and rudder angle.
- Vessel drag is determined by the sum of forces inflicted on the ship over time. This is determined by the shape and state of the hull, position of rudder and/or position and power of steerable propellers if being used.
- Wire drag is determined by the sum of forces inflicted from the towed equipment such as a trawl over time.
- Disturbance in the form of e.g surface current, waves and wind will affect the ship over time.

The trawl path is determined by the sum of forces over time.
- Trawl drag can be adjusted by changing the shape of the trawl by controlling doors, weights and wire tension and wire length. Trawl drag is also a result of trawl characteristics, filling of trawl and external disturbances like current.
- Trawl movement sideways to the wire drag is determined by sum of sideways forces inflicted by wire drag, trawl doors, trawl weights, seabed topography and current. This can be adjusted by direct control of adjustable doors and weights.
- Wire drag is determined by the sum of forces inflicted backwards from trawl drag, and forwards from the ship over time. Forward forces are controlled by throttle, pitch, rudder, and the point of attach of wire.

Disturbance in the form of e.g sub surface current will also affect the trawl vector over time.

The forces discussed above regarding control of both the trawl and vessel path by adjusting the tension and momentum of the wire drag from the trawl to the vessel is also discussed in Norwegian Patent Application NO20170593.

The forces affecting the vessel and trawl provide a number of variables that may be measured and used to move the trawl along an optimal and efficient path toward the target area. In addition, realizing that the main purpose of the movement is not the vessel path 27a but finding the optimal trawl path 28a when considering the minimum power consumption during the operation.

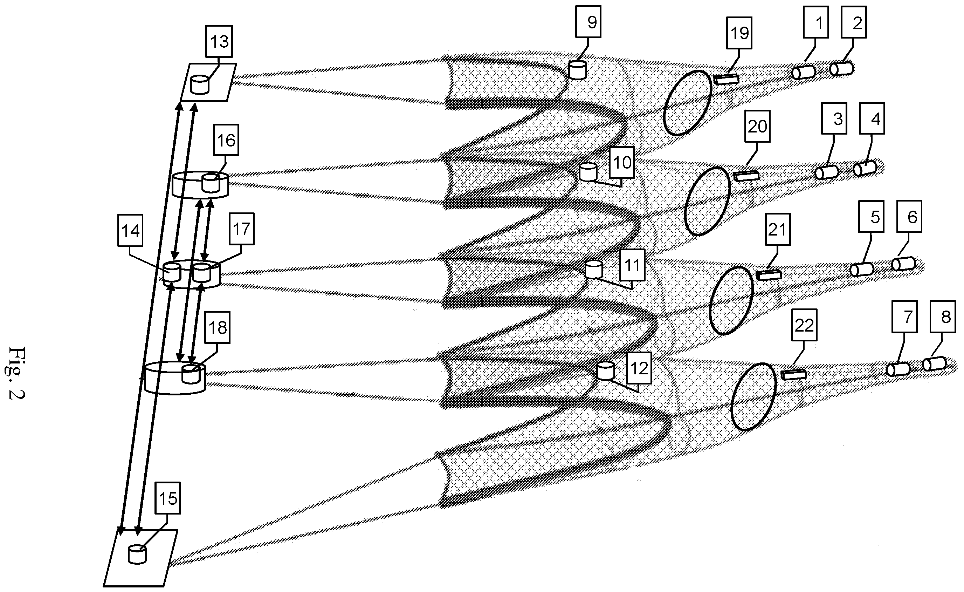

Figure 2 illustrates an embodiment of a trawl having a number of sensors, where
1-8 represents catch sensors, measuring the filling of trawl and thus the weight of the trawl.
9,12 Measures trawl speed, pitch/roll, depth, distance to bottom, temperature and gives echogram of trawl.
10,11 Measures the pitch/roll, depth, distance to bottom, temperature and gives echogram of trawl.
14,17 Dual axis clump sensors, measuring distance to trawl door sensors.
13,16,18,15 represents door sensors measuring the distance between paired doors and thus the width of the trawl, as well as pitch, roll, depth and temperature.
19-22 Catch sensor with echogram to provide detail information about the catch passing into the codend, in addition to distance to bottom, pitch/roll, depth and temperature.
23-24 Trawl door sounder to provide rapid accurate distance to seabed, in addition to providing echogram to show catch passing underneath towards the trawl.

All of these measurements may be included in the calculation of the optimal trawl path along with the measurements of the target position and position of the trawl relative to the target as well as the vessel.

When a target volume is detected, e.g. using a sonar or echosounder system, the calculation means estimates an optimal path based on - fully or partly, but not limited to - the following:
1. The measured movement of the target volume.
2. The signals from the trawl sensors providing the true position of the trawl in three dimensions.
3. Signals form the trawl relating to symmetry, width, angle, doors, depth etc.
4. Signals from the vessel positioning system, e.g. GPS and autopilot, regarding the true position and course of the vessel.
5. Signal from the onboard radar and navigation system giving location, speed and course of surrounding vessels.
6. Signal from the onboard navigation systems giving information about other fixed or floating objects.
7. Signals from the onboard weather station regarding wind strength and direction.
8. Signals form doppler log regarding current velocity and direction in several layers in the water column.
9. Signals from the heave/pitch/roll sensors.
10. Prediction signal from the mapping machine which, based on the above, estimates about the topography and sea bottom conditions, indicates if it allows a trawl tow over a certain area without risking damages.

Based on these signals the system decides how the different alternatives may be used to steer the trawl in the optimal way toward the target volume. This may be performed dynamically depending on the movements of the target volume and how the trawl will meet it.

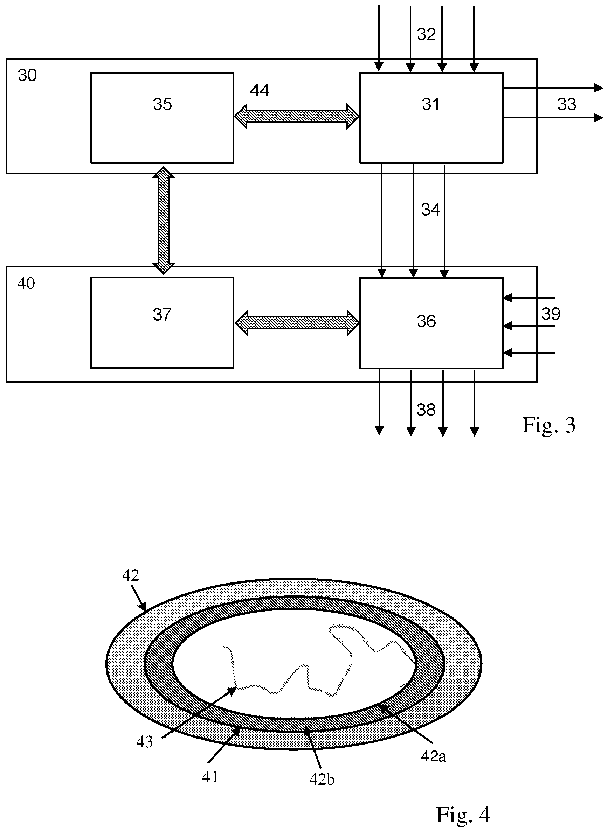

This is illustrated in the system shown in figure 3 where a trawl pilot 30 with a trawl pilot control 31 receives a number of data 32 such as, but not limited to the target volume fish school position, depth, size etc., as well as vessel parameters such as position, speed, rate of turn etc., current and wind data and other operational parameters. The trawl pilot 30 includes a route estimator 35 proposing a towed path 44, e.g. based on economic priorities and based on this provides
necessary commands 34 to the trawl controller 40 including a trawl control unit 36 for adjusting parameters like angle of attach, trawl shape and trawl position.

These trawl movements are then achieved by providing suitable control signals 38 to the relevant steering means. This is done primarily by adjusting the weights and doors Ref Fig 1; 24 of the trawl as is well known in the art. Secondarily to adjust trawl gallows and blocks and winches 25 on the vessel, and finally to sending signals 33 to the vessel 21 engaging changes to the rudder and propulsion power 26 on the vessel (ref Fig 3). In order to obtain this the trawl controller 40 may also utilize measured or known information 39 about wire tension, doors positions and the symmetry of the system in order to optimize the trawl control. In order to maintain a degree of symmetry while using the doors to contribute to the steering, the individual doors may be synchronized in the control system.

The range of priority of above actions might vary in order to obtain the sum of actions ensuring the least use of energy and most effective route optimization. All of above while also taking into consideration the optimum shape of the complete trawl systems and the safest route regarding other vessels and other fishing equipment or other objects.

In this operation there is also a feedback where the effects on the trawl movements are predicted by a trawl predictor 37 (ref Fig 3) in the trawl controller and fed back to the route estimator 35 so as to provide a continuous adjustment of the trawl being added to the estimation model and thus influencing the estimated trawl trajectory.

In estimating the trawl trajectory some variations are allowed within an acceptable window of movements, so as to limit the need for fast and power consuming changes. This is illustrated in figure 4 where a safe envelop boundary 42 enclosing a safety margin is defined and within this an estimated boundary of controllability 41 of the trawl. As a safety precaution the operating boundary 42b is defined within this, wherein the route estimator and trawl control allow same variations in the trawl movements over a span of time 43.

The acceptable window may thus be based on a model involving the following calculations:
Calculate dynamic trawl system behavior
Calculate operating boundary
Calculate safety margins
Calculate trawl resistance
Calculate Angle of Attack of trawl system
Calculate effects of wind and current.

This may be achieved based on different estimator models such as, but not limited to:
«Trawl safety envelope» model defining the safe trajectory, e.g. avoiding sea bottom or other obstacles along the planned trajectory.
«Disturbance model» including currents and other dynamic disturbances actively changing the real trajectory.
«Trawl system dynamic model» describing the dynamic behavior of the trawl during an operation. The real trawl movements should preferably be kept within the limits of these models while calculating the most efficient route and recommending means to achieve this route.

The precise nature of the models and calculations used by the route estimator will depend on the different types of trawls and vessels as well as the measurements provided by related sensors and instruments, as well as environmental conditions, e.g. variations in sea floor, depth, currents, trawl size, vessel maneuverability, and safe vessel routes avoiding dangerous or unwanted contacts with other vessels and other fixed or floating objects.

To summarize the present invention thus relates to a trawl steering system comprising a sea vessel and a trawl system, the system including a measuring unit such as a sonar or echosounder system for detecting and monitoring the position and movements of a target volume in the sea where the target volume may be constituted by a school, veil or haze of fish or shrimps to be caught in the trawl. The vessel also includes means for monitoring the position of the trawl relative to said target volume. The system comprising sampling means for sampling information including wind, current, and vessel and trawl characteristics and a route estimator for estimating the optimal route or path of the trawl. The system also comprises a trawl controller for adjusting vessel and trawl parameters so as to provide a movement for the trawl toward the target volume along said optimal path thus increasing the catch and reducing the bunker consumption and associated environmental impact.

The control means may include a vessel control unit calculating the vessel movements necessary to steer the trawl along the estimated route toward the target volume. The trawl also comprises steering means that are adapted to move the trawl relative to the vessel so as to move toward the target area, wherein the steering means include doors, deflectors or weights positioned at the trawl for adjusting the position in the lateral and/or vertical direction relative to said path along said trajectory.

The route estimator may include interfaces for receiving measurements from the environment, e.g. wind or current, measurements from the vessel and the trawl, as well as the measured movement of the target area and to calculate the trawl trajectory based on said measurements.

The system may also include a navigation unit monitoring the global position of the vessel, the system being adapted to measure the position of the target volume and the trawl relative to the vessel.

The system might also include signals from one or several radar units onboard the vessel, and/or other navigational systems giving information about fixed or floating objects to be avoided.

The steering means may include interactive use of moving the trawl towing points on the vessel laterally and/or vertically, and in addition possibly also by adjusting length of towing wires.

The system also comprises automation systems, hardware and software systems, based on artificial intelligence to provide a hierarchical list of actions comprising a priority of navigational means such as to ensure safest trawl trajectory route using the least amount of energy. This is based on a priority list of a first step to maneuver the trawl relative to the vessel movements so as to move toward the target area and secondly to maneuver the vessel and trawl including interactive use of moving the trawl towing points on the vessel laterally and/or vertically, and in addition possibly also by adjusting length of towing wires, and thirdly to maneuver the vessel and trawl using rudder and propulsion power, or any combination of the above.

## Claims

1. Trawl steering system comprising a sea vessel (27) and a trawl system having a trawl (28), the trawl steering system including:
- a measuring unit adapted to detect and monitor the position and movements of a target volume (29) in the sea, the target volume (29) constituted by a school, veil or haze of fish or shrimps to be caught in the trawl (28), and to monitor the position of the trawl (28) relative to said target volume (29);
- sampling means adapted to sample information including wind, current, and vessel and trawl characteristics;
- a trawl pilot (30) comprising a route estimator (35) adapted to calculate an optimal trawl path (28a) and a trawl pilot control (31) adapted to send signals (33) to the vessel (27); and
- controller means (40) adapted to adjust vessel and trawl parameters so as to provide a movement for the trawl (28) toward the target volume (29) along said optimal path (28a), and to receive commands (34) from the trawl pilot (30);
- steering means comprising:
- weights, doors (24) or deflectors arranged on the trawl (28), and wherein the weights doors (24) or deflectors are adapted to receive control signals (38) from the controller means (40) and to adjust the position of the trawl (28) relative to the sea vessel (27);
- trawl towing points on the vessel (27), wherein the trawl towing points are movable laterally and/or vertically on the vessel (27), and towing wire being adjustable in length; and
- automation systems, hardware and software systems, which are based on artificial intelligence to provide a hierarchical list of actions comprising a priority of navigational means to ensure the safest trawl path using the least amount of energy, said hierarchical list of actions including one or more of:
- adjustment of the weights, doors (24) or deflectors,
- lateral and/or vertical movement of the trawl towing points on the vessel (27), possibly including length adjustment of the towing wires, and
- use of the vessel's rudder and propulsion power (26).

2. Trawl steering system according to claim 1, wherein the route estimator (35) is provided with an estimation model wherein a safe envelop boundary (42) is defined and an estimated boundary of controllability (41) of the trawl (28) is defined within said safe envelop boundary (42) and wherein an operating boundary (42b) is defined within the boundary of controllability (41), so that the route estimator (35) and controller means (40) allow some variations in the trawl movements over a span of time (43).

3. Trawl steering system according to claim 2, wherein the controller means (40) comprises a trawl predictor (37) and wherein, in operation, the route estimator (35) is adapted to send and receive feedback to/from the trawl predictor (37) so as to provide a continuous adjustment of the trawl (28) being added to the estimation model and thus influencing the estimated optimal trawl path (28a).

4. Trawl steering system according to claim 1, wherein the controller means (40) includes a vessel control unit adapted to calculate the vessel movements necessary to steer the trawl (28) according to the estimated route toward the target volume (29), while avoiding any danger of collision or unwanted interface with other vessels and other fishing equipment.

5. Trawl steering system according to claim 1, wherein said route estimator (35) includes interfaces adapted to receive measurements from the environment, e.g. wind or current, measurements from the vessel (27) and the trawl (28), as well as the measured movement of the target volume (29) and to calculate the optimal trawl path based on said measurements.

6. Trawl steering system according to claim 1, comprising a navigation unit monitoring the global position of the vessel (27), the trawl steering system being adapted to measure the position of the target volume (29) and the trawl (28) relative to the vessel (27).

## Patentansprüche

1. Schleppnetzlenksystem, umfassend ein Seeschiff (27) und ein Schleppnetzsystem mit einem Schleppnetz (28), wobei das Schleppnetzlenksystem Folgendes beinhaltet:
- eine Messeinheit, die dazu angepasst ist, die Position und Bewegungen eines Zielvolumens (29) im Meer zu detektieren und zu überwachen, wobei sich das Zielvolumen (29) aus einer Schule, einem Schwarm oder einer Ansammlung von Fischen oder Garnelen zusammensetzt, die mit dem Schleppnetz (28) zu fangen sind, und die Position des Schleppnetzes (28) bezogen auf das Zielvolumen (29) zu überwachen;
- ein Probenahmemittel, das zum Beproben von Informationen angepasst ist, die Wind-, Strömungs- sowie Schiffs- und Schleppnetzeigenschaften beinhalten;
- einen Schleppnetzpiloten (30), der einen Routenschätzer (35), der dazu angepasst ist, einen optimalen Schleppnetzpfad (28a) zu berechnen, und eine Schleppnetzpilotensteuerung (31) umfasst, die dazu angepasst ist, Signale (33) an das Schiff (27) zu senden; und
- ein Steuerungsmittel (40), das dazu angepasst ist, Schiffs- und Schleppnetzparameter so einzustellen, dass eine Bewegung des Schleppnetzes (28) in Richtung des Zielvolumens (29) entlang des optimalen Pfads (28a) ermöglicht wird, und Befehle (34) von dem Schleppnetzpiloten (30) zu empfangen;
- wobei das Steuerungsmittel Folgendes umfasst:
- Gewichte, Türen (24) oder Deflektoren, die an dem Schleppnetz (28) angeordnet sind, und wobei die Gewichte, Türen (24) oder Deflektoren dazu angepasst sind, Steuersignale (38) von dem Steuerungsmittel (40) zu empfangen und die Position des Schleppnetzes (28) bezogen auf das Seeschiff (27) einzustellen;
- Schleppnetz-Abschlepppunkte an dem Schiff (27), wobei die Schleppnetz-Abschlepppunkte lateral und/oder vertikal an dem Schiff (27) bewegbar sind und der Abschleppdraht in der Länge verstellbar ist; und
- Automatisierungssysteme, Hard- und Softwaresysteme, die auf künstlicher Intelligenz basieren, um eine hierarchische Liste von Handlungen bereitzustellen, die eine Priorität des Navigationsmittels umfasst, um den sichersten Schleppnetzpfad unter Verwendung des geringsten Energieaufwands sicherzustellen, wobei die hierarchische Liste von Handlungen eines oder mehrere von Folgendem beinhaltet:
- einer Einstellung der Gewichte, Türen (24) oder Deflektoren,
- einer lateralen und/oder vertikalen Bewegung der Schleppnetz-Abschlepppunkte an dem Schiff (27), möglicherweise einschließlich einer Längenverstellung der Abschleppdrähte, und
- einer Verwendung der Ruder- und Antriebsleistung (26) des Schiffes.

2. Schleppnetzlenksystem nach Anspruch 1, wobei der Routenschätzer (35) mit einem Schätzmodell bereitgestellt ist, wobei eine sichere Hüllkurvengrenze (42) definiert ist und eine geschätzte Grenze der Steuerbarkeit (41) des Schleppnetzes (28) innerhalb der sicheren Hüllkurvengrenze (42) definiert ist und wobei innerhalb der Steuerbarkeitsgrenze (41) eine Betriebsgrenze (42b) definiert ist, sodass der Routenschätzer (35) und das Steuerungsmittel (40) gewisse Variationen der Schleppnetzbewegungen über eine Zeitspanne (43) ermöglichen.

3. Schleppnetzlenksystem nach Anspruch 2, wobei das Steuerungsmittel (40) einen Schleppnetzprädiktor (37) umfasst und wobei der Routenschätzer (35) im Betrieb dazu angepasst ist, Feedback an den Schleppnetzprädiktor (37) zu senden und von diesem zu empfangen, um eine kontinuierliche Einstellung des Schleppnetzes (28) bereitzustellen, die dem Schätzmodell hinzugefügt wird und somit den geschätzten optimalen Schleppnetzpfad (28a) beeinflusst.

4. Schleppnetzlenksystem nach Anspruch 1, wobei das Steuerungsmittel (40) eine Schiffssteuereinheit beinhaltet, die dazu angepasst ist, die Schiffsbewegungen zu berechnen, die zum Lenken des Schleppnetzes (28) entsprechend der geschätzten Route in Richtung des Zielvolumens (29) erforderlich sind, wobei ein jegliches Risiko einer Kollision oder einer unerwünschten Schnittstelle mit anderen Schiffen und anderer Fischereiausrüstung vermieden wird.

5. Schleppnetzlenksystem nach Anspruch 1, wobei der Routenschätzer (35) Schnittstellen beinhaltet, die dazu angepasst sind, Messungen aus der Umgebung, z. B. Wind oder Strömung, Messungen von dem Schiff (27) und dem Schleppnetz (28) sowie die gemessene Bewegung des Zielvolumens (29) zu empfangen und auf Grundlage der Messungen den optimalen Schleppnetzpfad zu berechnen.

6. Schleppnetzlenksystem nach Anspruch 1, umfassend eine Navigationseinheit, welche die globale Position des Schiffs (27) überwacht, wobei das Schleppnetzlenksystem dazu angepasst ist, die Position des Zielvolumens (29) und des Schleppnetzes (28) bezogen auf das Schiff (27) zu messen.

## Revendications

1. Système de direction de chalut comprenant un navire de mer (27) et un système de chalut comportant un chalut (28), le système de direction de chalut comprenant :
- une unité de mesure adaptée pour détecter et surveiller la position et les mouvements d'un volume cible (29) dans la mer, le volume cible (29) étant constitué par un banc, un voile ou un brouillard de poissons ou de crevettes à capturer dans le chalut (28), et pour surveiller la position du chalut (28) par rapport audit volume cible (29) ;
- un moyen d'échantillonnage adapté pour échantillonner des informations comprenant des caractéristiques de vent, de courant, de navire et de chalut ;
- un pilote (30) de chalut comprenant un estimateur de route (35) adapté pour calculer une trajectoire de chalut optimale (28a) et une commande (31) de pilote de chalut adaptée pour envoyer des signaux (33) au navire (27) ; et
- un moyen de commande (40) adapté pour régler des paramètres de navire et de chalut de façon à fournir un mouvement pour le chalut (28) vers le volume cible (29) le long de ladite trajectoire optimale (28a), et pour recevoir des commandes (34) du pilote (30) de chalut ;
- un moyen de direction comprenant :
- des poids, des portes (24) ou des déflecteurs agencés sur le chalut (28), et lesdites portes, lesdites poids (24) ou lesdits déflecteurs étant adaptés pour recevoir des signaux de commande (38) en provenance d'un moyen de commande (40) et pour régler la position du chalut (28) par rapport au navire de mer (27) ;
- des points de remorquage de chalut sur le navire (27), lesdits points de remorquage de chalut étant mobiles latéralement et/ou verticalement sur le navire (27), et le fil de remorquage étant réglable en longueur ; et
- les systèmes d'automatisation, les systèmes matériels et logiciels, qui sont basés sur l'intelligence artificielle pour fournir une liste hiérarchique d'actions comprenant une priorité de moyens de navigation pour assurer la trajectoire de chalut la plus sûre en utilisant le moins de quantité d'énergie, ladite liste hiérarchique d'actions comprenant un ou plusieurs parmi :
- le réglage des poids, des portes (24) ou des déflecteurs,
- le mouvement latéral et/ou vertical des points de remorquage de chalut sur le navire (27), comprenant éventuellement le réglage de la longueur des câbles de remorquage, et
- l'utilisation du gouvernail et de la puissance de propulsion du navire (26).

2. Système de direction de chalut selon la revendication 1, ledit estimateur de route (35) étant doté d'un modèle d'estimation, une limite d'enveloppe de sécurité (42) étant définie et une limite estimée de commandabilité (41) du chalut (28) étant définie à l'intérieur de ladite limite d'enveloppe de sécurité (42) et une limite de fonctionnement (42b) étant définie à l'intérieur de la limite de commandabilité (41), afin que l'estimateur de route (35) et le moyen de commande (40) permettent certaines variations dans les mouvements du chalut sur une période de temps (43).

3. Système de direction de chalut selon la revendication 2, ledit moyen de commande (40) comprenant un prédicteur (37) de chalut et, lors du fonctionnement, ledit estimateur de route (35) étant adapté pour envoyer et recevoir une rétroaction vers/en provenance du prédicteur (37) de chalut de façon à fournir un réglage continu du chalut (28) ajouté au modèle d'estimation et influençant ainsi la trajectoire de chalut optimale estimée (28a).

4. Système de direction de chalut selon la revendication 1, ledit moyen de commande (40) comprenant une unité de commande de navire adaptée pour calculer les mouvements de navire nécessaires pour diriger le chalut (28) selon l'itinéraire estimé vers le volume cible (29), tout en évitant tout risque de collision ou d'interface indésirable avec d'autres navires et d'autres équipements de pêche.

5. Système de direction de chalut selon la revendication 1, ledit estimateur de route (35) comprenant des interfaces adaptées pour recevoir des mesures en provenance de l'environnement, par exemple du vent ou du courant, des mesures en provenance du navire (27) et du chalut (28), ainsi que le mouvement mesuré du volume cible (29) et pour calculer la trajectoire de chalut optimale sur la base desdites mesures.

6. Système de direction de chalut selon la revendication 1, comprenant une unité de navigation surveillant la position globale du navire (27), le système de direction de chalut étant adapté pour mesurer la position du volume cible (29) et du chalut (28) par rapport au navire (27).
